# EUROPEAN PATENT APPLICATION

(11) **EP 3 226 402 A1**
(43) Date of publication of application: **04.10.2017**
(21) Application number: 15863507.8
(22) Date of filing: 29.09.2015
(51) Int. Cl.: H02P 6/16

(54) **MOTOR DRIVE DEVICE**

(30) Priority: 26.11.2014 JP 2014238816; 25.08.2015 JP 2015166045
(71) Applicant: Sanken Electric Co., Ltd., Niiza-shi, Saitama 352-8666 (JP)
(72) Inventor: SUZUKI, Mio, Niiza-shi Saitama 352-8666 (JP); TAKAMORI, Yasuyuki, Niiza-shi Saitama 352-8666 (JP)
(74) Representative: Reitstötter Kinzebach
(86) International application number: PCT/JP2015/004931
(87) International publication number: WO 2016/084294

(57) **Abstract**

Provided is a motor drive device capable of suppressing degradation in motor efficiency even when a Hall element is driven intermittently.

The motor drive device (1) which drives a brushless DC motor (M) in which Hall elements (2U, 2V, and 2W) configured to detect magnetic poles of a rotor and output a pair of Hall voltages having opposite polarities are disposed as a position detection unit detecting the position of the rotor, the motor drive device includes: an internal regulator (13) which intermittently outputs a drive voltage (VReg) to the Hall elements (2U, 2V, and 2W), intermittently drives the Hall elements and functions as a Hall sensor power supply; and an electric angle prediction unit (16) which predicts a zero-cross timing of the input Hall voltage. The internal regulator (13) switches to the DC driving which outputs a constant drive voltage to the Hall elements (2U, 2V, and 2W), during a zero-cross preceding period from before the zero-cross of the Hall voltage until the zero-cross is detected, based on the prediction result by the electric angle prediction unit (16).

## Description

### TECHNICAL FIELD

The present invention relates to a motor drive device which drives a brushless DC motor.

### BACKGROUND ART

In recent years, a brushless DC motor used as a fan motor for air conditioners, air purifiers and the like is desired not only to reduce the power consumption due to an inverter driving system, but also to reduce the power consumption of the motor drive device that drives the brushless DC motor. About 70% of the current consumption of the control power supply of the motor drive device is used for driving the Hall element in the normal operation. Therefore, a technique, in which the power supply for the Hall element intermittently drives at a cycle sufficiently shorter than the zero-cross cycle of the Hall voltage to reduce the current consumption, has been proposed (for example, see Patent Literature 1).

### Citation List

### [Patent Literature]

[Patent Literature 1]: JP-A-S63-39486

### SUMMARY OF THE INVENTION

### Technical Problem

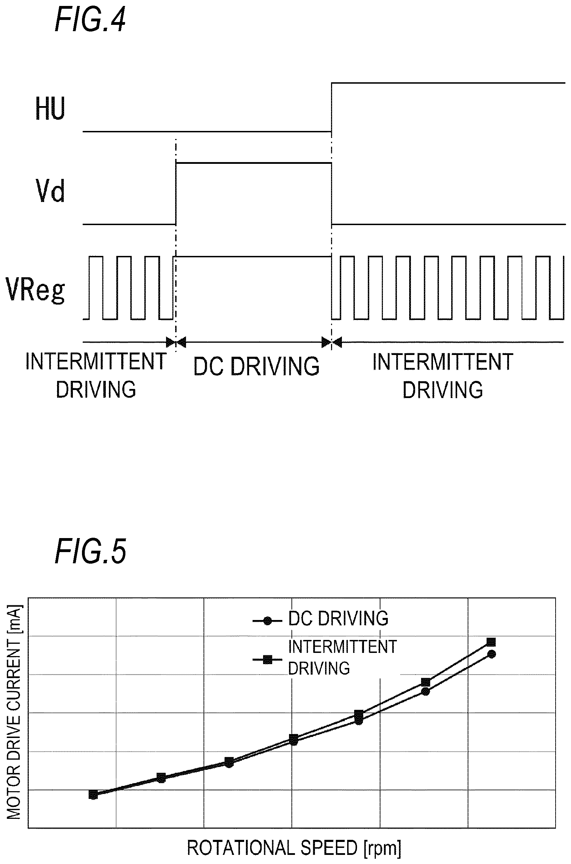

However, as in the prior art, when the power supply for the Hall element is intermittently driven, there was a problem of degradation of the motor efficiency. FIG. 5 is a graph in which the motor efficiency in a case where the power supply for the Hall element is DC-driven is compared with the motor efficiency in a case where the power supply for the Hall element is intermittently driven, and the vertical axis represents the motor drive current [mA], and the horizontal axis represents the rotational speed [rpm]. According to FIG. 5, when the power supply for the Hall element is intermittently driven, it is understood that the motor drive current increases and the motor efficiency is degraded as compared with the case where the Hall element power supply is DC-driven. The degradation of the motor efficiency becomes more notable as the rotational speed becomes larger.

In view of the above problem, an object of the present invention is to provide a motor drive device capable of suppressing degradation of motor efficiency even when a Hall element is driven intermittently.

### Solution to Problem

In order to achieve the above object, a motor drive device according to the present invention is configured as follows.

A motor drive device of the present invention drives a brushless DC motor in which a Hall sensor configured to detect magnetic poles of a rotor and output a pair of Hall voltages having opposite polarities is disposed as a position detection unit detecting the position of the rotor, and the motor drive includes: a Hall sensor power supply which intermittently outputs a drive voltage to the Hall sensors to intermittently drive the Hall sensor; and an electric angle prediction unit which predicts a zero-cross timing of the input Hall voltage, wherein the Hall sensor power supply switches to DC driving, in which a constant drive voltage is output to the Hall sensors, during a zero-cross preceding period from before the zero-cross of the Hall voltage until the zero-cross is detected, based on the prediction result by the electric angle prediction unit.

Further, a motor drive device according to present invention drives a brushless DC motor in which Hall sensors for detecting magnetic poles of a rotor and outputting a pair of Hall voltages having opposite polarities is disposed as a position detection unit detecting the position of the rotor, and the motor drive device includes: a Hall sensor power supply which intermittently outputs a drive voltage to the Hall sensors to intermittently drive the Hall sensor; and an electric angle prediction unit which predicts a zero-cross timing of the input Hall voltage, wherein the Hall sensor power supply increases a duty ratio, by which the drive voltage is intermittently output, during a zero-cross preceding period from before the zero-cross of the Hall voltage to the detection of the zero-cross, as compared with a period other than the zero-cross preceding period, based on the prediction result by the electric angle prediction unit.

### Advantageous Effects of the Invention

According to the present invention, even if the Hall element is driven intermittently, since zero-cross of the Hall voltage can be detected without delay, it is possible to suppress degradation of motor efficiency.

### BRIEF DESCRIPTION OF THE DRAWINGS

FIG. 1 is a block diagram illustrating a configuration of a motor drive device according to a first embodiment of the present invention.
FIG. 2 is a waveform chart for explaining delay of a Hall signal during the intermittent driving.
FIG. 3 is a waveform chart illustrating an example of a drive switching signal output from an electric angle prediction unit illustrated in FIG. 1.
FIG. 4 is a waveform chart for explaining switching between the intermittent driving and the DC driving, by the drive switching signal illustrated in FIG. 3.
FIG. 5 is a diagram illustrating degradation in motor efficiency due to the intermittent driving of a Hall element.
FIG. 6 is a block diagram illustrating a configuration of a motor drive device according to a second embodiment of the present invention.
FIG. 7 is a waveform chart for explaining an example of switching a duty ratio by the drive switching signal illustrated in FIG. 3.
FIG. 8 is a waveform chart for explaining an example of switching a duty ratio according to the drive switching signal illustrated in FIG. 3.
FIG. 9 is a waveform chart for explaining an example of switching drive voltages by the drive switching signal illustrated in FIG. 3.

### DESCRIPTION OF EMBODIMENTS

Next, embodiments of the present invention will be described in detail with reference to the drawings. In each drawing, the same components are denoted by the same reference numerals, and a part thereof will not be provided.

### Example 1

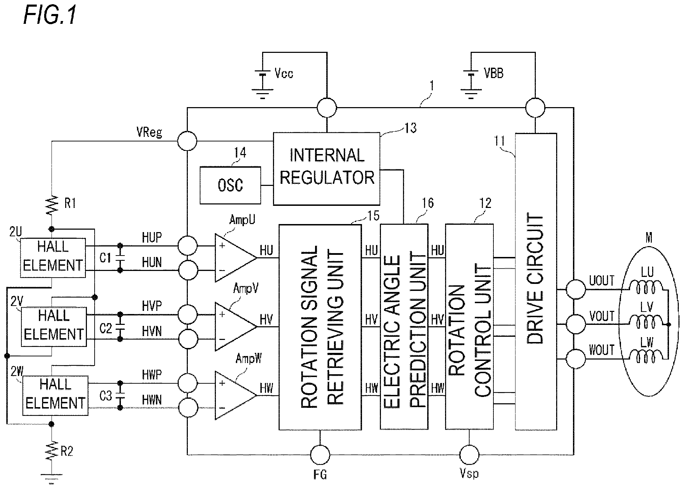

Referring to FIG. 1, a motor drive device 1 of a first embodiment includes a drive circuit 11, a rotation control unit 12, an internal regulator 13, an oscillator (OSC) 14, Hall amplifiers AmpU, AmpV, and AmpW, a rotation signal retrieving unit 15, and an electric angle prediction unit 16.

The drive circuit 11 obtains electric power supplied from the main power source VBB and generates and outputs applied voltages UOUT, VOUT, and WOUT which are applied to drive windings LU, LV, and LW of a 3-phase brushless DC motor M, respectively. The drive circuit 11 is made up of, for example, six N-channel MOS-FETs or IGBTs connected in a totem-pole manner.

The rotation control unit 12 grasps the rotational position of the rotor based on the Hall signals HU, HV, and HW, which are input, and generates a drive signal for driving the drive circuit 11 based on a control signal Vsp input from an external control unit (for example, six PWM (Pulse Width Modulation) signals for driving the six N-channel MOS-FETs of the drive circuit 11).

The internal regulator 13 obtains the electric power supplied from the control power source Vcc and supplies electric power to each part of the motor drive device 1. In addition, the internal regulator 13 generates and outputs a drive voltage VReg (for example, 5V) for driving the Hall elements 2U, 2V, and 2W, which are attached to the 3-phase brushless DC motor M at every electric angle of 120 degrees for example, and functions as a Hall sensor power supply. The Hall elements 2U, 2V, and 2W are position detection units for detecting the position of the rotor of the 3-phase brushless DC motor M, and are Hall sensors which detect the magnetic poles of the rotor and output a pair of Hall voltages having opposite polarity. The Hall voltages output from the Hall elements 2U, 2V, and 2W are zero-crossed at every electric angle of 180 degrees with centering the voltage dividing based on the resistors R1 and R2, according to rotations of the 3-phase brushless DC motor M.

The internal regulator 13 is configured to be able to switch between an intermittent driving, in which the drive voltage VReg is intermittently output at a cycle sufficiently shorter than the zero-cross cycle of the Hall voltage based on a pulse signal output from the oscillator (OSC) 14, and a DC driving, in which a constant drive voltage VReg is output. Further, between the output terminal of the drive voltage VReg and the ground terminal, the resistor R1, the Hall elements 2U, 2V, and 2W connected in parallel, and the resistor R2 are connected.

The hall voltages HUP and HUN output from the Hall element 2U are input to the Hall amplifier AmpU, the Hall voltages HVP and HVN output from the Hall element 2V are input to the Hall amplifier AmpV, and the Hall voltages HWP and HWN output from the Hall element 2W are input to the Hall amplifier AmpW, respectively.

The Hall amplifier AmpU compares the two input Hall voltages HUP and HUN, and when the Hall voltage HUP becomes higher than the Hall voltage HUN, the Hall signal HU to be output is switched from low level to high level, and when the Hall voltage HUP becomes equal to or lower than the Hall voltage HUN, the Hall signal HU to be output is switched from high level to low level. The Hall amplifiers AmpV and AmpW operate similarly to the Hall amplifier AmpU, and output a Hall signal HV and a Hall signal HW, respectively.

Based on the input Hall signals HU, HV, and HW, the rotation signal retrieving unit 15 generates a rotation signal FG that switches between high level and low level at every electric angle of 60 degrees, for example, and outputs the generated rotation signal FG to an external control unit.

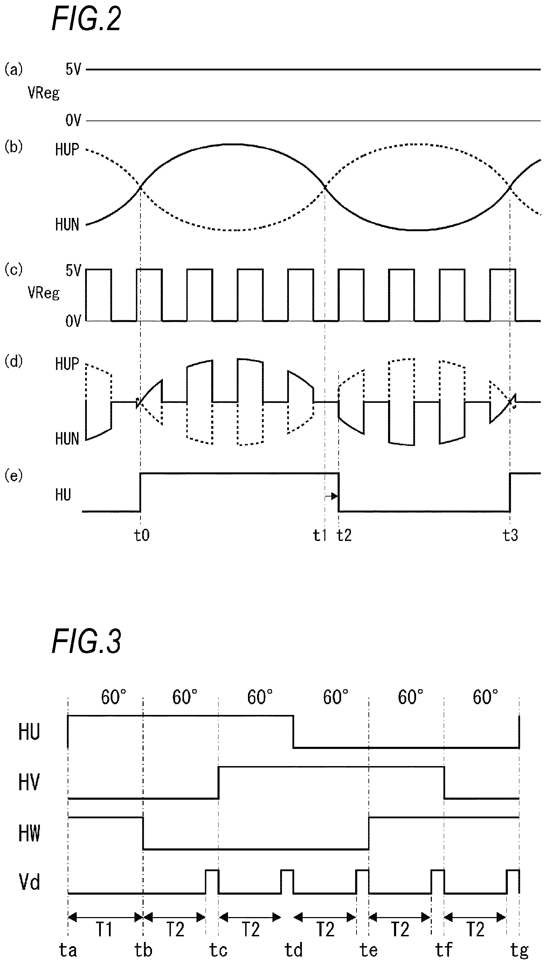

In FIG. 2, (a) illustrates the drive voltage VReg during the DC driving, (b) illustrates the Hall voltages HUP and HUN during the DC driving, (c) illustrates the drive voltage VReg during the intermittent driving, (d) illustrates the Hall voltages HUP and HUN during the intermittent driving, and (e) illustrates the Hall signal HU during the intermittent driving, respectively. In FIG. 2, the frequency during the intermittent driving of the drive voltage VReg is illustrated to be smaller than the actual value for the sake of explanation. The period during the intermittent driving of the actual drive voltage VReg is, for example, 50 µs (frequency is 20 kHz), which is sufficiently shorter than the zero-cross cycle of the Hall voltages HUP and HUN. When the number of poles of the 3-phase brushless DC motor M is 8 and the rotational speed is 1000 rpm, the zero-cross cycle of the Hall voltages HUP and HUN is 7.5 ms.

As illustrated in FIG. 2(a), during the DC driving in which a constant drive voltage VReg is applied to the Hall element 2U, the Hall voltages HUP and HUN are continuously output as illustrated in FIG. 2B. Thus, it is possible to accurately detect the zero-cross of the Hall voltages HUP and HUN at times t0, t1, and t3. Hereinafter, the timing at which the zero-cross of the Hall voltage is detected is referred to as zero-cross detection timing. In contrast, as illustrated in FIG. 2(c), when the drive voltage VReg applied to the Hall element 2U is driven intermittently as illustrated in FIG. 2(d), the Hall voltages HUP and HUN are output only in the period when the drive voltage VReg is applied to the Hall element 2U. Therefore, at the time t1, if the drive voltage VReg is not applied to the Hall element 2U, the zero-cross detection timing reaches the time t2 at which the drive voltage VReg is next applied. This delay leads to degradation in motor efficiency.

Therefore, in the present embodiment, the electric angle prediction unit 16 predicts the zero-cross timings of the Hall voltages output from the Hall elements 2U, 2V, and 2W respectively, and switches the driving of the Hall elements 2U, 2V, and 2W by the internal regulator 13 from the intermittent driving to the DC driving, at an predicted zero-cross timing of the Hall voltage.

The electric angle prediction unit 16 assumes that the 3-phase brushless DC motor M rotates at a constant rotational speed, and predicts the zero-cross timing of the Hall voltage to be output from each of the Hall elements 2U, 2V, and 2W, based on the Hall signals HU, HV, and HW. Further, the electric angle prediction unit 16 instructs the internal regulator 13 to switch from the intermittent driving to the DC driving, by setting the drive switching signal Vd to the high level at the timing before the Hall voltage zero-cross. When the zero-cross of the Hall voltage is detected, the electric angle prediction unit 16 instructs the internal regulator 13 to switch from the DC driving to the intermittent driving, by setting the drive switching signal Vd to the low level.

In FIG. 3, Hall signals HU, HV, and HW input to the electric angle prediction unit 16 are illustrated. The timing at which the high level and the low level are switched in the Hall signals HU, HV, and HW is the zero-cross detection timing at which the zero-cross of the Hall voltage is detected, and any of the Hall signals HU, HV, and HW switches between the high level and the low level at every electric angle of 60 degrees. First, by measuring the time between the zero-cross detection timings (for example, times ta to tb, times ta to td) by an internal clock, the electric angle prediction unit 16 calculates the Hall voltage zero-cross cycle T1, that is, a time T1, in which the 3-phase brushless DC motor rotates by an electric angle of 60 degrees.

Based on the calculated zero-cross cycle T1, the electric angle prediction unit 16 switches the drive switching signal Vd to the high level at the timing before the zero-cross cycle T1 has elapsed from the zero-cross detection timing to instruct the internal regulator 13 to switch from the intermittent driving to the DC driving. For example, as illustrated in FIG. 3, the electric angle prediction unit 16 calculates a driving switching time T2 (T2 = T1 * 50/60) that is 10 degrees before the zero-cross cycle T1 by an electric angle, and switches the drive switching signal Vd to the high level after the driving switching time T2 from the zero-cross detection timing. For example, when the number of poles of the 3-phase brushless DC motor M is eight and the rotational speed is 1000 rpm, the drive switching signal Vd is changed to high level after about 6.25 ms (7.5 ms * 50/60) from the zero-cross detection timing. Therefore, as illustrated in FIG. 4, the driving of the Hall elements 2U, 2V, and 2W is switched from the intermittent driving to the DC driving and the zero-cross of the Hall voltage is detected without delay.

In the present embodiment, the timing of switching from the intermittent driving to the DC driving is set to 10 degrees before the electric angle of the predicted zero-cross timing. The value of the electric angle can be appropriately set in consideration of the mounting error of the Hall elements 2U, 2V, and 2W and the deviation of the zero-cross detection timing due to the change of the rotational speed based on the control signal Vsp. That is, even if the zero-cross timing deviates due to the mounting error of the Hall elements 2U, 2V, and 2W or the change in the rotational speed based on the control signal Vsp, it is preferable to switch from the intermittent driving to the DC driving before the predicted zero-cross timing so that the DC driving is performed at the zero-cross timing.

When the electric angle prediction unit 16 detects the zero-cross of the Hall voltage, that is, when either the Hall signals HU, HV, and HW switches between high level and low level, as illustrated in FIG. 4, the electric angle prediction unit 16 sets the drive switching signal Vd to low level to instruct the internal regulator 13 to switch from the DC driving to the intermittent driving. As a result, current consumption is reduced.

The measurement between the zero-cross detection timings by the electric angle prediction unit 16 and the calculation of the zero-cross cycle T1 may be performed normally and may be performed at every predetermined time or at the time of changing the rotational speed based on the control signal Vsp. If the zero-cross detection timing is measured and the zero-cross cycle T1 is calculated with intervals, it is preferable that the electric angle prediction unit 16 switches the drive switching signal Vd to the high level at the time of measuring the time between the zero-cross detection timings to perform the DC driving of the Hall elements 2U, 2V, and 2W. In this case, since it is not necessary to consider the delay of the zero-cross detection timing, the time measurement between the zero-cross detection timings and the calculation of the zero-cross cycle T1 can be accurately performed in a short time.

As described above, in the present embodiment, a motor drive device 1 drives the 3-phase brushless DC motor M, in which Hall elements 2U, 2V, and 2W for detecting magnetic poles of the rotor and outputting a pair of Hall voltages having opposite polarities are disposed as a position detection unit detecting the position of the rotor, and includes an internal regulator 13 which functions as a Hall sensor power supply that intermittently outputs the drive voltage VReg to the Hall elements 2U, 2V, and 2W to intermittently drive the Hall elements 2U, 2V, and 2W, and an electric angle prediction unit 16 which predicts the zero-cross timing of the input Hall voltage, and, the internal regulator 13 switches to the DC driving in which a constant drive voltage VReg is output to the Hall elements 2U, 2V, and 2W during a zero-cross preceding period from before the zero-cross of the Hall voltage until the zero-cross is detected, based on the prediction result by the electric angle prediction unit 16.

According to this configuration, even when the Hall elements 2U, 2V, and 2W are intermittently driven by the internal regulator 13, it is possible to perform the DC driving the Hall elements 2U, 2V, and 2W at the time of zero-cross of the Hall voltage and detect the zero-cross of the Hall voltage without delay, so that it is possible to suppress degradation of the motor efficiency.

Further, in the present embodiment, the electric angle prediction unit 16 measures the time between the zero-cross detection timings at which the zero-cross of the input Hall voltage is detected, and based on the measurement result, the electric angle prediction unit 16 instructs the internal regulator 13 to switch from the intermittent driving to the DC driving at the timing before zero-cross of the Hall voltage, and instructs the internal regulator 13 to switch from the DC driving to the intermittent driving when the zero-cross of the Hall voltage is detected.

According to this configuration, it is possible to accurately predict the zero-cross timing by measuring the time between the zero-cross detection timings.

Furthermore, in the present embodiment, the electric angle prediction unit 16 measures the time between the zero-cross detection timings at intervals and instructs the interior regulator 13 to switch from the intermittent driving to the DC driving in the time for measuring a time between the zero-cross detection timings.

According to this configuration, since it is unnecessary to take into account the delay of the zero-cross detection timing, it is possible to accurately perform the measurement between the zero-cross detection timings and the calculation of the zero-cross cycle T1 in a short time.

### Example 2

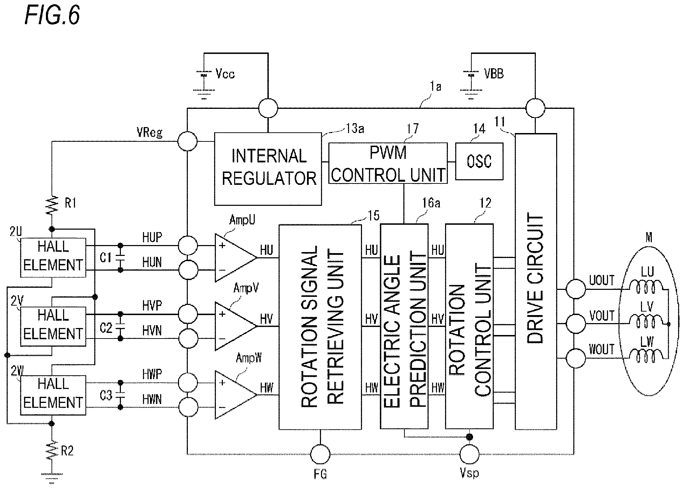

Referring to FIG. 6, in the motor drive device 1a of a second embodiment, an internal regulator 13a, an electric angle prediction unit 16a, and a PWM control unit 17 are different from the motor drive device 1 of the first embodiment.

The motor drive device 1a includes a PWM control unit 17 that generates a PWM (Pulse Width Modulation) signal having a cycle of a pulse output from the oscillator (OSC) 14 at regular intervals. The cycle of the pulse output from the oscillator (OSC) 14 is set to a cycle sufficiently shorter than the zero-cross cycle of the Hall voltage.

Based on the PWM signal generated by the PWM control unit 17, the internal regulator 13a outputs the drive voltage VReg when the PWM signal is at the high level, and stops output of the drive voltage VReg when the PWM signal is at the low level. As a result, the Hall elements 2U, 2V, and 2W are intermittently driven at a cycle sufficiently shorter than the zero-cross cycle of the Hall voltage, based on the PWM signal generated by the PWM control unit 17.

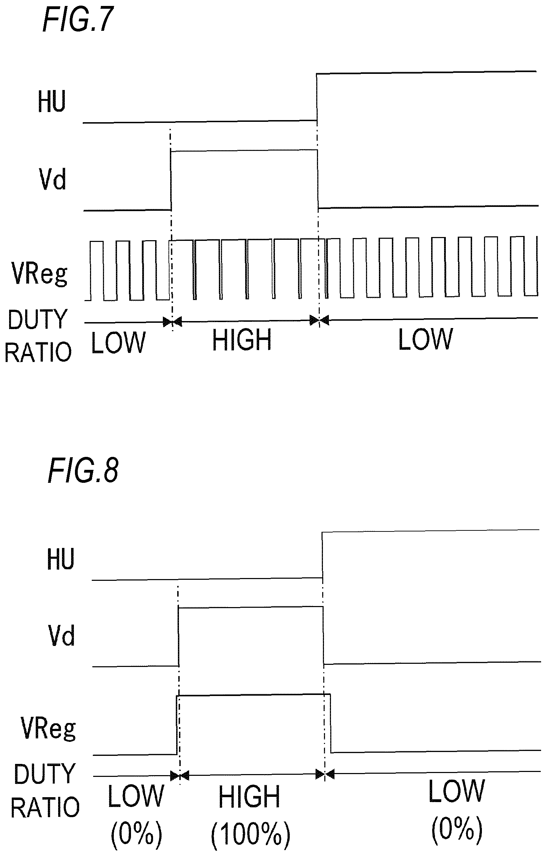

The PWM control unit 17 changes the duty ratio of the PWM signal to be generated in accordance with the drive switching signal Vd output from the electric angle prediction unit 16a. As illustrated in FIG. 7, the PWM control unit 17 increases the duty ratio of the PWM signal, when the drive switching signal Vd is at the high level, as compared with the case where the drive switching signal Vd is at the low level. Therefore, the period during which the output of the drive voltage VReg is stopped is shortened in the zero-cross preceding period from before the zero-cross of the Hall voltage until the zero-cross is detected. Therefore, the delay of the zero-cross detection is reduced. Even when the rotational speed of the 3-phase brushless DC motor M varies, since the Hall elements 2U, 2V, and 2W are driven intermittently at a cycle that is sufficiently shorter than the zero-cross cycle, the delay of the zero-cross detection is reduced. FIG. 8 illustrates an example in which the duty ratio of the PWM signal is 100% when the drive switching signal Vd is at the high level. In this case, in the zero-cross preceding period, the Hall elements 2U, 2V, and 2W are DC-driven with a constant drive voltage VReg. In addition, FIG. 8 illustrates an example in which the duty ratio of the PWM signal is 0% when the drive switching signal Vd is at the low level. In this case, during the period other than the zero-cross preceding period cycle, the Hall elements 2U, 2V, and 2W are in a stopped state in which the drive voltage VReg is not applied, and the power consumption can be further reduced.

A control signal Vsp which indicates the rotational speed from outside is input to the electric angle prediction unit 16a. The rotation control unit 12 modulates the duty of the drive signal based on the instruction by the control signal Vsp and drives the drive circuit 11. The drive circuit 11 controls the rotational speed of the 3-phase brushless DC motor M based on the drive signal. The electric angle prediction unit 16a predicts the timing before the zero-cross of the Hall voltage, based on the zero-cross detection timing at which the zero-cross of the input Hall voltage is detected and the control signal Vsp. That is, the rotational speed of the 3-phase brushless DC motor M can be known by the control signal Vsp, and it is possible to predict the timing before the next zero-cross from the zero-cross detection timing. Further, the electric angle prediction unit 16a switches the drive switching signal Vd to the high level at the timing before the zero-cross of the Hall voltage, and switches the drive switching signal Vd to the low level when the zero-cross of the Hall voltage is detected. Further, the electric angle prediction unit 16a may measure the time between the zero-cross detection timings and predict the timing before the zero-cross of the Hall voltage based on the measurement result.

Further, the electric angle prediction unit 16a compares the rotational speed of the 3-phase brushless DC motor M grasped by the control signal Vsp and the Hall signals HU, HV, and HW with the preset rotational speed threshold value, and may be configured to predict the timing before the zero-cross of the Hall voltage only when the rotational speed of the 3-phase brushless DC motor M is equal to or higher than the rotational speed threshold value. In this case, degradation of the motor efficiency can be suppressed in a region in which the rotational speed, at which the degradation of the motor efficiency becomes conspicuous, increases.

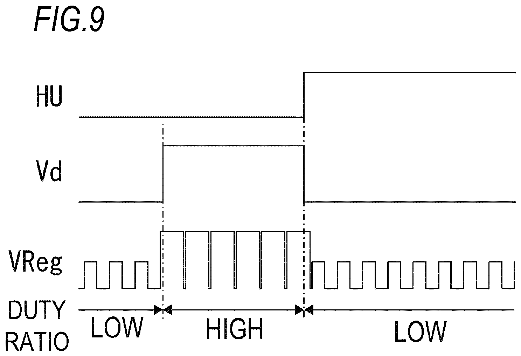

Further, as illustrated in FIG. 9, the drive switching signal Vd from the electric angle prediction unit 16a is input to the internal regulator 13a, and during a period other than the zero-cross preceding period (a period during which the drive switching signal Vd is at the low level), the drive voltage may be lowered as compared with the zero-cross preceding period (a period during which the drive switching signal Vd is at a high level). That is, when the drive voltage is lowered, since the output levels of the Hall signals HU, HV, and HW are lowered, a possibility of erroneous detection is increased due to the influence of noise or the like. However, during a period other than the zero-cross preceding period, a little erroneous detection is allowed. Therefore, by lowering the drive voltage during the period other than the zero-cross preceding period, the power consumption can be further reduced.

As described above, in the present embodiment, a motor drive device 1a drives the 3-phase brushless DC motor M in which Hall elements 2U, 2V, and 2W for detecting magnetic poles of the rotor and outputting a pair of Hall voltages having opposite polarities are disposed as a position detection unit detecting the position of the rotor, and includes an internal regulator 13a which functions as a Hall sensor power supply for intermittently outputting the drive voltage VReg to the Hall elements 2U, 2V, and 2W to intermittently drive the Hall elements 2U, 2V, and 2W, and an electric angle prediction unit 16a which predicts the zero-cross timing of the input Hall voltage, and the internal regulator 13a increases the duty ratio, by which the drive voltage Vreg is intermittently output, in the zero-cross preceding period from before the zero-cross of the Hall voltage to the detection of the zero-cross, as compared with the period other than the zero-cross preceding period, based on the prediction result by the electric angle prediction unit 16a.

According to this configuration, even if the Hall elements 2U, 2V, and 2W are intermittently driven by the internal regulator 13, since it is possible to suppress the detection delay of the zero-cross of the Hall voltage and to detect the zero-cross of the Hall voltage without delay, it is possible to suppress the degradation of the motor efficiency.

Furthermore, in the present embodiment, the internal regulator 13a sets the duty ratio to 100% in the zero-cross preceding period, and switches to the DC driving that outputs the constant drive voltage VReg to the Hall elements 2U, 2V, and 2W.

According to this configuration, even if the Hall elements 2U, 2V, and 2W are intermittently driven by the internal regulator 13, since the zero-cross of the Hall voltage can be detected without delay, the degradation of the motor efficiency can be suppressed.

Further, in the present embodiment, the internal regulator 13a stops the output of the drive voltage VReg to the Hall elements 2U, 2V, and 2W by setting the duty ratio to 0% in the period other than the zero-cross preceding period.

According to this configuration, it is possible to further reduce power consumption.

Furthermore, in the present embodiment, the internal regulator 13a lowers the drive voltage VReg in the period other than the zero-cross preceding period as compared with the zero-cross preceding period.

According to this configuration, it is possible to further reduce power consumption.

Furthermore, in the present embodiment, the electric angle prediction unit 16a measures the time between the zero-cross detection timings at which the zero-cross of the input Hall voltage is detected, and the electric angle prediction unit 16a predicts the timing before the zero-cross of the Hall voltage, based on the measurement result.

According to this configuration, it is possible to accurately predict the zero-cross timing by measuring the time between the zero-cross detection timings.

Further, in the present embodiment, the electric angle prediction unit 16a predicts the timing before the zero-cross of the Hall voltage, based on the zero-cross detection timing at which the zero-cross of the input Hall voltage is detected and the control signal Vsp from the outside instructing the rotational speed.

According to this configuration, it is possible to easily predict the zero-cross timing by the control signal Vsp.

The configurations, shapes, sizes, and arrangement relationships described in the above embodiments are only schematically illustrated to the extent that the present invention can be understood and implemented, and numerical values and composition (material) or the like of each component is merely an example. Accordingly, the present invention is not limited to the embodiments described above, but can be modified in various forms without departing from the scope of the technical idea described in the claims.

For example, the Hall elements 2U, 2V, and 2W as the Hall sensors may be replaced with Hall ICs, and the plurality of Hall sensors may be connected in series.

In addition, the Hall sensor power supply may be either a constant current source or a constant voltage source, and the resistors R1 and R2 may not be provided in accordance with the configuration of the Hall sensor power supply.

Also, in order to measure the time between the zero-cross detection timings, an external clock or charging and discharging of a capacitor or the like may be used without being limited to the built-in clock.

### Industrial Applicability

The present invention is applicable to a brushless DC motor drive device in which a Hall sensor is disposed as a position detection unit detecting the position of the rotor and which is used as a fan motor of an air conditioner, an air purifier, or the like.

### Reference Signs List

1, 1a: Motor drive device
2U, 2V, 2W: Hall element
11: Drive circuit
12: Rotation control unit
13, 13a: Internal regulator
14: Oscillator (OSC)
15: Rotation signal retrieving unit
16, 16a: Electric angle prediction unit
17: PWM control unit
AmpU, AmpV, AmpW: Hall amplifier
VBB: Main power supply
Vcc: Control power supply
M: 3-phase brushless DC motor
LU, LV, LW: Drive winding

## Claims

1. A motor drive device which drives a brushless DC motor in which a Hall sensor configured to detect magnetic poles of a rotor and output a pair of Hall voltages having opposite polarities is disposed as a position detection unit detecting the position of the rotor, the motor drive device comprising:
a Hall sensor power supply, which intermittently outputs a drive voltage to the Hall sensors to intermittently drive the Hall sensor; and
an electric angle prediction unit, which predicts a zero-cross timing of the input Hall voltage,
wherein the Hall sensor power supply switches to DC driving, in which a constant drive voltage is output to the Hall sensors, during a zero-cross preceding period from before the zero-cross of the Hall voltage until the zero-cross is detected, based on the prediction result by the electric angle prediction unit.

2. The motor drive device according to claim 1,
wherein the electric angle prediction unit measures a time between zero-cross detection timings at which the zero-cross of the input Hall voltage is detected, and based on the measurement result, the electric angle prediction unit instructs the Hall sensor power supply to switch from the intermittent driving to the DC driving at the timing before the zero-cross of the Hall voltage.

3. The motor drive device according to claim 1,
wherein the electric angle prediction unit instructs the Hall sensor power supply to switch from the DC driving to the intermittent driving when the zero-cross of the Hall voltage is detected .

4. The motor drive device according to claim 1,
wherein the electric angle prediction unit measures a time between zero-cross detection timings at intervals and instructs the Hall sensor power supply to switch from the intermittent driving to the DC driving in the time for measuring intervals between the zero-cross detection timings.

5. A motor drive device which drives a brushless DC motor in which Hall sensors for detecting magnetic poles of a rotor and outputting a pair of Hall voltages having opposite polarities is disposed as a position detection unit detecting the position of the rotor, the motor drive device comprising:
a Hall sensor power supply which intermittently outputs a drive voltage to the Hall sensors to intermittently drive the Hall sensor; and
an electric angle prediction unit which predicts a zero-cross timing of the input Hall voltage,
wherein the Hall sensor power supply increases a duty ratio, by which the drive voltage is intermittently output, during a zero-cross preceding period from before the zero-cross of the Hall voltage to the detection of the zero-cross, as compared with a period other than the zero-cross preceding period, based on the prediction result by the electric angle prediction unit.

6. The motor drive device according to claim 5,
wherein the Hall sensor power supply sets the duty ratio to 100% during the zero-cross preceding period to switches to the DC driving, in which the constant drive voltage to the Hall sensors is output.

7. The motor drive device according to claim 5,
wherein the Hall sensor power supply stops the output of the drive voltage to the Hall sensors, by setting the duty ratio to 0% in the period other than the zero-cross preceding period.

8. The motor drive device according to claim 5,
wherein the Hall sensor power supply lowers the drive voltage in the period other than the zero-cross preceding period as compared with the zero-cross preceding period.

9. The motor drive device according to claim 5,
wherein the electric angle prediction units measures a time between zero-cross detection timings at which the zero-cross of the input Hall voltage is detected, and predicts the timing before the zero-cross of the Hall voltage, based on the measurement result.

10. The motor drive device according to claim 5,
wherein the electric angle prediction unit predicts a timing before the zero-cross of the Hall voltage, based on the zero-cross detection timing at which the zero-cross of the input Hall voltage is detected and a control signal instructing a rotational speed from the outside.
